# EUROPEAN PATENT SPECIFICATION

(11) **EP 4 276 557 B1**
(45) Date of publication and mention of the grant of the patent: **18.02.2026**
(21) Application number: 22172319.0
(22) Date of filing: 09.05.2022
(51) Int. Cl.: G05B 19/418, G06Q 50/04, G06Q 10/0639

(54) **A METHOD AND A SYSTEM FOR TRACKING THE DOWNTIME OF A PRODUCTION MACHINE**
EIN VERFAHREN UND EIN SYSTEM ZUR VERFOLGUNG DER STILLSTANDSZEIT EINER PRODUKTIONSMASCHINE
UNE MÉTHODE ET UN SYSTÈME POUR SUIVRE LE TEMPS D'ARRÊT D'UNE MACHINE DE PRODUCTION

(43) Date of publication of application: 15.11.2023
(73) Proprietor: BOBST MEX SA, 1031 Mex (CH)
(72) Inventor: DELISLE, Maxime, 1358 Valeyres (CH); KJI, Houda, 1822 Chernex (CH)
(74) Representative: Wagner, Sigrid

(56) References cited:
- WO-A1-2005/017635
- WO-A1-2019/199674
- US-A1- 2006 149 407

## Description

The invention relates to a method for tracking the downtime of a production machine and to a system for tracking the downtime of a production machine.

In a production plant, the downtime of a production machine may have a huge impact on the overall productivity of the production plant.

Consequently, it is a general desire of the operators of such production plants to keep the downtimes of the production machines as short as possible. This requires however the knowledge of the reasons for the downtimes of the specific production machines.

US 2006/149407 A1, WO 2019/199674 A1, and WO 2005/017635 A1 disclose generic methods to achieve productivity related information.

Therefore, it is the object of the invention to provide an easy possibility to gain insights on the reasons for the downtimes of the production machines.

To achieve this object, a method for tracking the downtime of a production machine is provided according to the subject matter of claim 1. The method comprises the steps of:
a) Continuously receiving by a control unit sensor data from a production machine and production target data,
b) Combining the sensor data and the production target data over a certain period providing combined data and calculating characteristic data of the combined data by the control unit,
c) Determining if the combined data is from a downtime period of the production machine based on the characteristic data, and
d) Characterizing the downtime period using a machine learning module implemented in the control unit, the machine learning module receiving the characteristic data of the downtime period as an input value and providing a reason for the downtime period as an output value.

The invention is based on the finding that a machine learning module can be used for the tracking of downtimes of a production machine. For this purpose, data related to the production machine is pre-processed and provided in a specific format to the machine learning module. Subsequently, the machine learning module provides one of a set of predefined reasons based on the input values. The predefined reasons are taught to the machine learning module through appropriate training of the machine learning module. This way, a system is provided that can also react to new unknown situations. Thus, an operator of the production machine does not have to classify the reason of a downtime period on his own and an easy-to-use downtime tracking method for a production machine is provided.

For instance, the machine learning module may be an ensemble of Random Forest and XGBoost. This combination turned out to be very efficient in providing reason for the downtime of the production machine.

Random forests, also known as random decision forests, are an ensemble learning method for classification, regression and other tasks that operates by constructing a multitude of decision trees at training time.

Additionally, XGBoost provides a regularizing gradient boosting framework and increases the calculation speed significantly.

The sensors of the production machine monitor the current state of the production machine continuously and each sensor provides corresponding sensor data.

For instance, a running speed, a total running time, a total number of performed motions and/or a time since the last downtime, of each individual component of the production machine are monitored via corresponding sensors and provide resulting sensor data to the control unit.

In general, it is conceivable that the control unit tracking the downtime of the production machine is a part of the respective production machine.

Alternatively, the control unit may be integrated into a central control unit of the production plant so that the control unit can monitor the downtime of multiple production machines. In this case, the control unit is connected wirelessly or via a cable to each of the sensors.

Further, the determination if the combined data is from a downtime period may be done with a decision tree by using threshold values for certain parameter of the characteristic data.

Alternatively, another with another machine learning module may be used for determination if the combined data is from a downtime period.

According to one aspect of the invention, the control unit may only consider these periods as downtime periods in which the production has stopped for at least one minute, in particular for at least three minutes. In practice, it turned out that especially those periods are relevant for increasing the overall productivity of the production machine in which the production machine has stopped its production for more than one or for more than three minutes.

The control unit may additionally receive event data from the production machine and provides the event data additionally to the machine learning module as input value. Events, such as the opening of a cover or an exchange of a component, are reliable indicators for the presence of corresponding situation. Accordingly, it turned out that the machine learning module provides more reliably the correct reason, when using additionally the event data.

In the context, event data refers to special events that are associated with the operation of the production machine. In contrast to the sensor data, the event data comprises singular events during the processing of a product.

For instance, the event data may relate to the exchange of ink, the re-filling of an ink reservoir, the replacement of a component and/or to the start of a new production job.

Alternatively or additionally, the event data may be a warning message or an error message of a component of the production machine and/or a user input at the production machine.

In general, it is conceivable that the control unit extracts at least part of the event data from the sensor data provided to the control unit.

In one embodiment of the invention, the reason may be one of an idle time, an out of production schedule, an equipment defect, a shop floor process defect, a maintenance or cleaning of the production machine, a setup of the production machine or an unknown reason. It turned out that the reasons mentioned (except for the reason "unknown reason" of course) are the typical causes for the down times of the production machine. Thus, by training the machine learning module with respect to these features, downtimes of the production machine can be very well tracked.

Further, the machine learning module additionally provides an identifier of a component of the production machine causing the downtime of the production machine. Thus, any downtime can be precisely analyzed and, if appropriate, the control unit can suggest a replacement of the specific component in case down times of the production machine due to this component accumulate.

The characteristic data may comprise at least one of the following values: a time since the last producing period of the production machine, a time since the last downtime period of the production machine, and/or a productivity of the production machine in the respective period. By using these parameters, a good compromise between fast and exact evaluation was achieved in practice with the machine learning module.

In one embodiment, the combined data of subsequent periods comprises a temporal overlap. To provide reliable reasons, the periods need a certain length. Therefore, more observations can be made by using this technique.

This technique is also known as rolling window or sliding window technique.

To provide a convenient and easy-to-understand analysis of the output of the machine learning module, the control unit stores the downtime periods and their characterization time-resolved. A display may be assigned to the control unit and the control unit may a visual evaluation of the downtime periods on the display.

In one embodiment, the control unit may provide additionally an expected duration of the downtime. This way, it is possible to react quickly to longer downtimes and outsource production to other machines in good time, for example.

For instance, the control unit bases the calculation of the expected duration on the durations of previous, similar downtimes.

It is conceivable that the control unit determines a severity downtime based on the reason and the component causing the downtime.

In other word, the expected duration is smaller in case the component can be exchanged quickly.

Moreover, the control unit may save the duration of all previous downtimes and search for a downtime with the most similar signature and base the expected duration of the current downtime on the duration of the previous downtime.

According to another aspect of the invention, the control unit performs additionally the following steps to determine a setup of the production machine:
- Tracking the current job identifier of the production performed at the production machine, and
- Detecting a change in the current job identifier, and
- Characterize the downtime period as a setup period in case the length of the period is within a certain time range.

In other word, the control unit executes a validation algorithm to increase the reliability of the outcome of the machine learning module.

The object of the invention is solved further by a system for tracking the downtime of a production machine. The system comprises a production machine and a control unit. The production machine processes a product according to production target data and has at least one sensor providing sensor data. The control unit continuously receives the sensor data from the production machine and is adapted to perform the aforementioned method. With respect to the features and advantages of the system, reference is made to the advantages and features of the method, which apply equally to the system.

The production machine may be one of a printing machine, a die-cutting machine, a hot foil stamping machine, a folding-gluing machine or a litho-laminating machine. Thus, the aforementioned method can be used at a variety of production machines and is thus versatile.

It is conceivable that the system comprises at least one additional production machine processing a product according to production target data. The additional production machine has at least one sensor providing sensor data and the control unit continuously receives the sensor data from the additional production machine and characterizes the downtime periods of all production machines. Accordingly, the downtimes of an entire production plant can be recorded and in this way the productivity of the entire plant can be increased.

Further features and advantages of the invention will be apparent from the following description of two embodiments with the aid of the enclosed drawings, in which:
- Figure 1 a schematic block diagram of a system according to a first embodiment of the invention,
- Figure 2 a schematic block diagram of a method according to the invention performed with the system of Figure 1,
- Figure 3 a schematic representation of the calculation of characteristic data in an period in a step of the method of Figure 2,
- Figure 4 an illustration of possible output values provided by a machine learning module used in the method of Figure 2,
- Figure 5 possible graphical representations of analysis of the tracked downtimes of the system of Figure 1, and
- Figure 6 a schematic block diagram of a system according to a second embodiment of the invention.

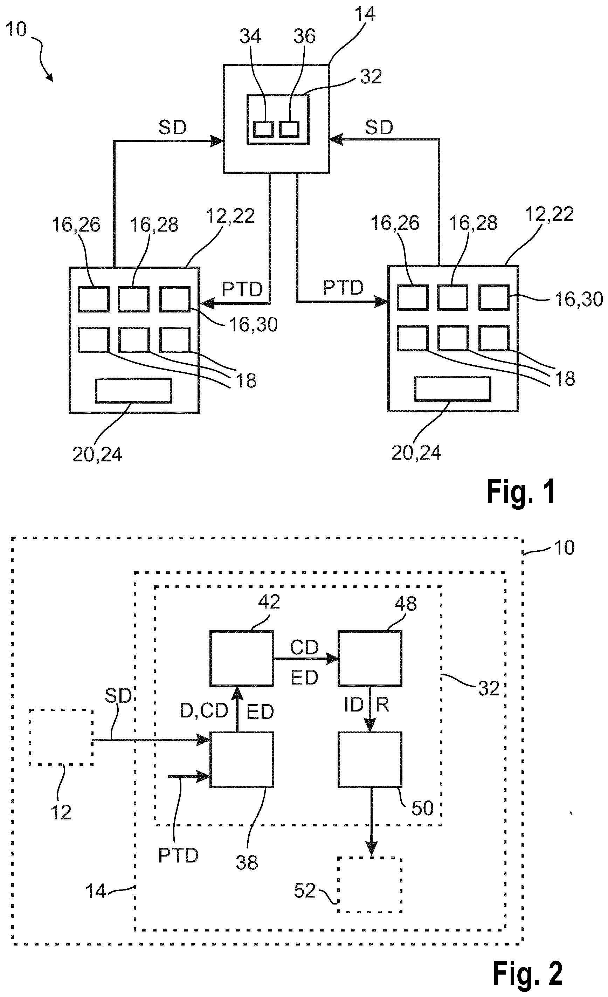

Figure 1 shows a system 10 comprising two production machines 12 and a central unit 14.

Each production machine 12 has several components 16 and several sensors 18 and is adapted to process a product 20 according to production target data PTD provided by central unit 14.

To be precise, each production machine 12 processes product 20 with its components 16.

Sensors 18 monitor the current state of the respective production machine 12 and provide corresponding sensor data SD. The sensor data is fed continuously to the central unit 14 via a data cable or a wireless communication.

For instance, sensor data SD may be transferred to central unit 14 via a WLAN or a Bluetooth connection.

In the shown embodiment, production machine 12 is a flexographic printing machine 22 and product 20 is a sheet 24 of paper.

The components 16 of printing machine 12 are an ink tray 26, an anilox roller 28, and a printing roller 30.

In a known manner, anilox roller 28 takes up ink from ink tray 26 through a rotational movement and transfers the ink to the printing roller 30. Printing roller 30 subsequently transferring the ink onto sheet 24.

Accordingly, the processing of product 20 is not shown embodiment the printing of forms onto sheet 24.

It has to be understood that Figure 1 is only illustrative in nature and that there are typically more than the shown components 16, i.e. a printing machine 22 has typically several ink trays 26, anilox rollers 28, and printing rollers 30.

In general, production machine 12 may also be a die-cutting machine, a hot foil stamping machine, a folding-gluing machine or a litho-laminating machine.

In the embodiment of figure 1, the two production machines 12 are of the same type, i.e. those production machines are printing machines 22.

Production machines 12 however may also be of different types. For instance, the first production machine 12 may be a printing machine 22 and the second print production machine 12 a folding-gluing machine further processing product 20 processed in the first production machine 12.

Moreover, system 10 may comprise a plurality of production machines 12.

To increase productivity of system 10, system 10 is adapted to track the downtime of production machines 12. For this purpose, central unit 14 has a control unit 32.

More specifically, control unit 32 comprises a data medium 34 and a computing unit 36, the data medium 34 having stored therein a computer program which is executed on computing unit 36 and which comprises program code means to track the downtime of production machines 12.

For this purpose, control unit 32 uses a method shown in the block diagram of Figure 2. In the block diagram, solid boxes represent logical blocks of control unit 32 and dashed blocks are hardware components, i.e. the physical components of system 10. Furthermore, arrows indicate data streams between the software and/or hardware components of system 10. For reasons of simplicity,

In a first step, control unit 32 continuously receives the sensor data SD from the sensors 18 and additionally the production target data PTD. This data is continuously stored in a volatile or non-volatile memory of control unit 32.

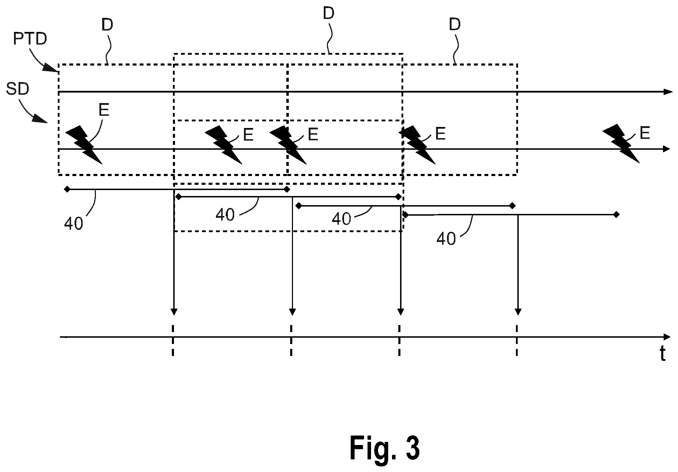

Subsequently, a pre-processing module 38 combines the sensor data SD and the production target data PTD in periods 40 with a certain length (Figure 3).

In the shown embodiment, the length of each period 40 is 10 minutes and subsequent periods 40 overlap in a window of five minutes, that is the last 50 % of the previous period.

It has to be understood that the length of the time periods 40 and also the length of the overlapping time periods is illustrative in nature. Therefore, the total length of a period 40 may also be shorter or longer (for instance 5 or 15 minutes) and the length of the overlapping period may also be shorter or longer (for instance the last 25% or 75% of the last period).

Pre-processing module 38 additionally calculates characteristic data CD (Figure 2) for each period 40.

As an example, preprocessing module 38 calculates the time since the last producing period of production machine 12, a time since the last downtime period of production machine 12 and\or the productivity of the production machine 12 in this period 40.

The productivity of the production machine 12 may be provided as a percentage value with respect to the maximal possible productivity of the production machine.

In other words, if production machine 12 is processing products 20 at full speed in eight minutes out of the ten minutes and in the other two minutes is idle, pre-processing module 38 would calculate a productivity value of 80%.

Additionally, pre-processing module 38 determines specific events E from the sensor data and provides corresponding event data ED.

In a next step, pre-processing module 38 feeds characteristic data CD and event data ED to a classification module 42.

Classification module 42 determines based on characteristic data CD and based on event data ED if production machine 12 was processing products 20 in the respective period 40.

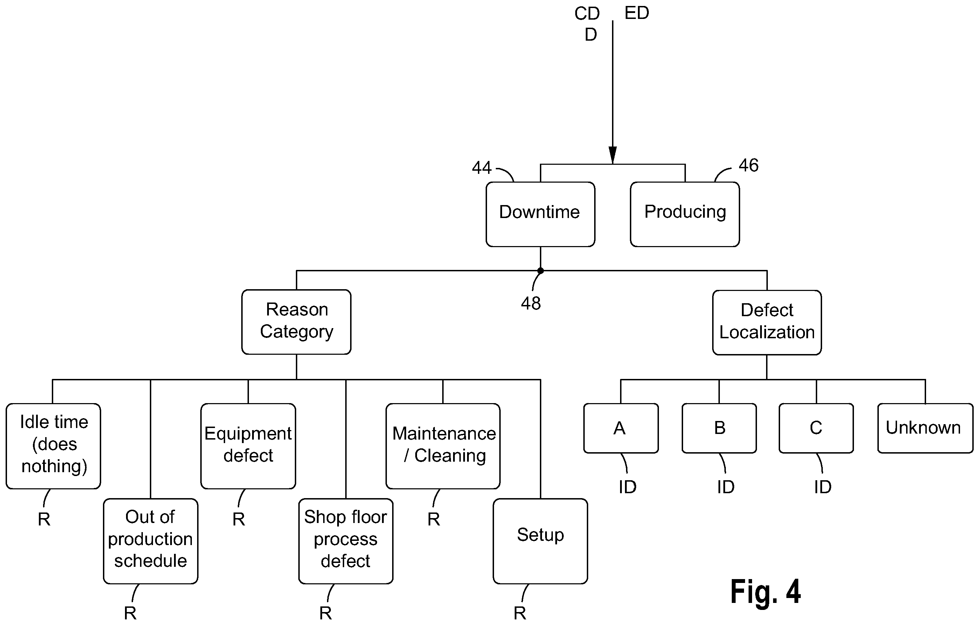

In other words, classification module 42 classifies the respective period 40 as a downtime's period 44 or as a producing period 46 (Figure 4).

For instance, classification module 42 classifies a period 40 as a downtime period 44 in case the productivity of the respective period 40 was below 50% or in case the time in which production machine 12 was not processing any products 20 laws larger than three minutes.

In case classification module 42 has detected the presence of a downtime period 44, the characteristic data CD and the event data ED is fed to a machine learning module 48 of control unit 32.

Machine learning module 48 comprises at least one neural network which was trained to provide a reason R and an identifier ID as output values for the data provided as input value.

In other words, machine learning module 48 provide a reason R 40 is downtime of the production machine in the downtime period 44 and the identifier ID of the component 16 causing the downtime of production machine 12 (Figure 4).

In particular, machine learning module 48 provides one the following reasons R. Additionally, an example is given for each reason.
- Idle time (A planned period in which production machine 12 should not process any products),
- Out of production schedule (Production machine 12 was not able to process any products in the downtime period 44, for instance because corresponding product 20 were not available for production machine 12)
- Equipment defect (A component 16 of production machine 12 broke or indicated an error, so that processing of products 20 had to be stopped in the downtime period 44),
- Shop floor process defect (A paper jam was detected and an operator of the production machine had to resolve the paper jam),
- Maintenance/cleaning (The quality of the forms printed on paper 24 was detected to be not good enough, so that printing roller 30 off printing machine 22 had to be cleaned),
- Setup (A new print job started and a new ink has to be filled into the ink tray 26), and
- Unknown (All other downtime periods 44).

In case the downtime period 44 is caused by a specific component 16 of production machine 12, machine learning module 48 to provide also the respective identifier of this component 16: In all other cases the machine learning module provides an unknown-tag.

The identifier ID of the component 16 causing the downtime and the reason R are subsequently fed to an analysis module 50 of control unit 14.

Analysis module 50 stores the identifier ID and the reason R and calculates the duration of the specific downtime time-resolved in the data medium 34.

Accordingly, analysis module 50 builds up a database with downtimes of production machine 12 and their duration, so that analysis module is adapted to provide an expected length of the current downtime.

For instance, analysis module 50 searches in the database for entries with the same reason R and the same component identifier 16 and provides a mean values of all the found entries as the expected duration of the downtime.

Moreover, analysis module 50 is also adapted to provide a validation of the reason R in case the ma

For this purpose, analysis module 50 executes the following steps:
- Tracking a current job identifier of the production performed at production machine 12,
- Detecting a change in the current job identifier, and
- Providing the reason R "setup" for the downtime period 44 in case the length of the period 44 is within a certain time range.

In other words, a threshold value for the length is stored in the data medium 34 and the analysis module validates the reason R of the machine learning module.

In case machine learning module 48 and analysis module 50 provide different reasons for a certain downtime period 44, the reason for this downtime period is changed to "unknown".

It is also conceivable that analysis module 50 executes the aforementioned steps for all outputs of machine learning module 50.

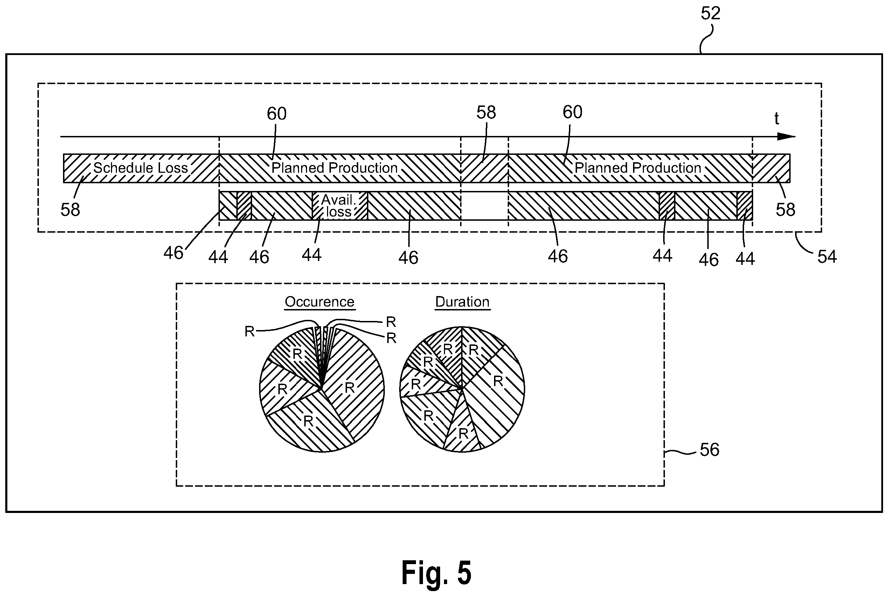

Subsequently the control unit 32 displays a graphical analysis 54, 56 (Figure 5) of the tracked downtimes on a display 52 of the control units.

The first analysis 54 provides a temporal overview of periods 58 in which no production was planned and of periods 60 in which a production was planned. These periods 58, 60 are taken from the production target data PTD.

For each period 60 in which a production was planned, the duration of periods 46 in which production machine was actually producing and the duration of downtime periods 44 is illustrated.

In the second analysis 56, a total number of occurrences of the reasons for the downtime and the corresponding summed duration of downtimes for each reason R is shown in a pie chart.

This way, an easy analysis and tracking of the downtimes of the production machine 12 is provided. In particular, an operator of the machine simply sees the reason R causing the timewise largest reason R for a downtime of production machine 12.

In general, it is conceivable that detailed information on downtime periods of a specific reason is provided on display 52 in case an operator of production machine 12 selects a specific reason R, for instance by clicking onto the specific reason R.

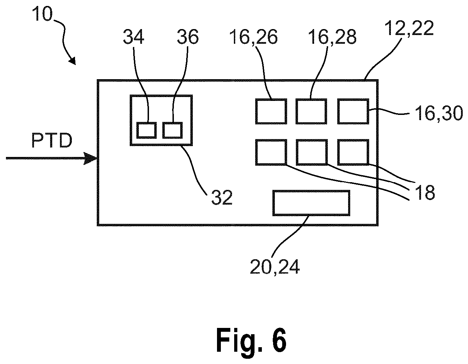

In Figure 6, a second embodiment of system 10 is shown in a similar block diagram as in Figure 1. The system 10 of Figure 6 essentially corresponds to the system 10 of Figure 1 so that only the differences between the first and the second embodiment will be discussed in the following. Identical and functionally identical components are provided with the same reference signs.

Compared to the system 10 of Figure 1, the control unit 32 is not integrated into a central unit, but integrated into production machine 12.

Accordingly, each production machine 12 of a production plant may be provided with its own control unit 32.

However, it is conceivable that all of the control units 32 are connected to each other and/or provide their data to the central unit.

Moreover, the downtime data of different production plants may also be shared between the different production plants by up- and downloading the respective data to central servers.

Regarding idle time, there are currently three steps. First, an analysis on the equipment's activity over a period of at least two months is used to automatically detect repetitive breaks occurring during production. Then, for each equipment where a repetitive break is found, a signature is created. Finally, every time a downtime occurs, it is then matched against those signatures to find if they correspond to the "Idle time" category.

Steps 1 and 2 are done offline, need to be applied on new equipment once it has produced for at least month and preferably for 2 months, and rerun on old equipment every couple of months for more up-to-date data. "offline" here refers to an algorithm runs with all the data available from the start, as a non-live activity.

Step 3 is done online and in real time, in the same pipeline as for the setup detection. "online" here refers to an algorithm which processes data piece-by-piece as it arrives in the cloud live.

### Step 1

The goal of step 1 is to flag intervals of time in a week when regular breaks from production occur.

The data used for this step comes from the telemetry in our cold storage. However, the same result could be obtained with machine events from the cold and warm storages with little adjustments.

The following operations, in order, are applied to the data:
1) Find the availability:
   a) Anomaly filtering (missing data for example)
   b) Resampling of the data to have one point per 5 minutes
   c) Switch of data to absolute to relative
   d) Clipping of data between 0 and 1
2) Using availability, clean data:
   a) Compute median availability
   b) Locate downtime intervals using median availability
   c) Filter out long downtimes (more than 1 hour)
   d) Filter out short downtimes (5 min or less)
3) Compute daily availability:
   a) Group filtered/clean data by minute and hour
4) Find frequent breaks
   a) Compute median daily availability
   b) Locate idle periods using half of median availability
   c) Filter out long idle periods (more than 1 hour)
   d) Filter out short idle periods (5 minutes or less)

### Step 2

The goal of step 2 is to create a signature for each valid idle period found in part 1. The signature comprises of variables such as:
- The average duration of the break
- The variability of duration between occurrences
- The variability of when the break happens between occurrences

The data used for this step is the output of step 1, as well as the input data of step 1.

The following operations, in order, are applied to our data:
1) Extraction of downtime intervals from telemetry
   a) Use machine state data to find downtime intervals
   b) Filter out long downtimes (more than 1 hour)
   c) Filter out short downtimes (5 min or less)
2) Create statistics for each idle period found in step 2
   a) Select all downtimes that intersect the idle period
   b) Compute the 0.85-HDR (Highest Density Region) of the idle time density function
   c) From the HDI above, extract the variability of when the break happens
   d) From the selected downtimes, compute the mean and standard deviation of the durations

### Step 3

The goal of step 3 is to use the signatures, created in step 2, to categorize the downtimes as idle time. This step is straightforward: when the micro-service is asked to categorize a downtime, the downtime goes through the same series of checks as before, and if a signature exists for the corresponding equipment, a new algorithmic pipeline is run in parallel to the other algorithms (setup for example).

In the algorithmic pipeline for the idle time, the middle of the downtime is matched against the signatures, if a match is found (there can be at most one by construction), the duration is then compared to the signature. It needs to be within one standard deviation of the mean duration for the pipeline to return a positive match.

If the idle time algorithmic pipeline matched, the micro-service returns the same downtime but with a predicted category of "Idle time". Only a match from the setup pipeline trumps.

## Claims

1. A method for tracking the downtime of a production machine (12), the method comprising the steps of:
a) Continuously receiving by a control unit (32) sensor data (SD) from a production machine (12) and production target data (PTD),
b) Combining the sensor data (SD) and the production target data (PTD) over a certain period (40) providing combined data (D) and calculating characteristic data (CD) of the combined data (D) by the control unit (32),
c) Determining if the combined data (D) is from a downtime period (44) of the production machine (12) based on the characteristic data (CD), and
d) Characterizing the downtime period (44) using a machine learning module (48) implemented in the control unit (32), wherein the machine learning module (48) provides one of a set of predefined reasons based on input values, wherein the predefined reasons are taught to the machine learning module (48) through training, the machine learning module (48) receiving the characteristic data (CD) of the downtime period (44) as an input value and providing a reason (R) for the downtime period (44) as an output value,
wherein the control unit (32) stores the downtime period (44) and its characterization time-resolved, and
in case the downtime period (44) is caused by a specific component (16) of the production machine (12), the machine learning module (48) provides additionally a respective identifier (ID) of the component (16) of the production machine (12) causing the downtime of the production machine (12).

2. Method according to claim 1, wherein the control unit (32) only considers these periods as downtime periods (44) in which the production of the production machine (12) has stopped for at least one minute, in particular for at least three minutes.

3. Method according to claim 1 or 2, wherein the control unit (32) additionally receives event data (ED) from the production machine (12) and provides the event data (ED) additionally to the machine learning (48) module as input value.

4. Method according to any one of the preceding claims, the reason (R) being one of an idle time, an out of production schedule, an equipment defect, a shop floor process defect, a maintenance or cleaning of the production machine (12), a setup of the production machine (12) or an unknown reason.

5. Method according to any one of the preceding claims, wherein the characteristic data (CD) comprises at least one of the following values: a time since the last production of the production machine (12), a time since the last downtime period (44) of the production machine (12), and/or a productivity of the production machine (12) in the respective period (40).

6. Method according to any one of the preceding claims, wherein the combined data (CD) of subsequent periods (40) comprises a temporal overlap.

7. Method according to any one of the preceding claims, wherein the control unit (32) stores the downtime periods (44) and their characterization time-resolved, wherein a display (52) is assigned to the control unit (32) and wherein the control unit (32) shows a visual evaluation of the downtime periods (44) on the display (52).

8. Method according to any one of the preceding claims, wherein the control unit (32) provides additionally an expected duration of the downtime of the production machine (12).

9. Method according to any one of the preceding claims, wherein the control unit (32) performs additionally the following steps to determine a setup of the production machine (12):
a) Tracking the current job identifier of the production performed at the production machine (12),
b) Detecting a change in the current job identifier, and
c) Characterizing the downtime period (44) as a setup period in case the length of the period is within a certain time range.

10. A system for tracking the downtime of a production machine (12), the system comprising
a production machine (12) processing a product (20) according to production target data (PTD), the production machine (12) having at least one sensor (18) providing sensor data (SD), and
a control unit (32) receiving continuously the sensor data (SD) from the production machine (12), the control unit (32) being adapted to perform a method according to one of the preceding claims.

11. The system according to claim 10, the production machine (12) being one of a printing machine (22), a die-cutting machine, a hot foil stamping machine, a folding-gluing machine or a litho-laminating machine.

12. The system according to claim 10 or 11, the system comprising at least one additional production machine (12) processing a product according to production target data (PTD), the additional production machine (12) having at least one sensor (18) providing sensor data (SD),
wherein the control unit (32) continuously receives the sensor data (SD) from the additional production machine (12) and characterizes the downtime periods of all production machines (12).

## Patentansprüche

1. Verfahren zum Verfolgen der Ausfallzeiten einer Produktionsmaschine (12), wobei das Verfahren die Schritte umfasst zum:
a) kontinuierlichen Empfangen durch eine Steuereinheit (32) von Sensordaten (SD) von einer Produktionsmaschine (12) und Produktionszieldaten (PTD),
b) Kombinieren der Sensordaten (SD) und der Produktionszieldaten (PTD) über einen gewissen Zeitraum (40), Bereitstellen von kombinierten Daten (D) und Berechnen von charakteristischen Daten (CD) aus den kombinierten Daten (D) durch die Steuereinheit (32),
c) Bestimmen, ob die kombinierten Daten (D) aus einem Ausfallzeitraum (44) der Produktionsmaschine (12) stammen, basierend auf den charakteristischen Daten (CD), und
d) Charakterisieren des Ausfallzeitraums (44) unter Verwendung eines in der Steuereinheit (32) implementierten maschinellen Lernmoduls (48), wobei das maschinelle Lernmodul (48) basierend auf Eingabewerten einen von einem Satz an vordefinierten Gründen bereitstellt, wobei die vordefinierten Gründe dem maschinellen Lernmodul (48) durch Training gelehrt werden, das maschinelle Lernmodul (48) die charakteristischen Daten (CD) des Ausfallzeitraums (44) als Eingabewert empfängt und einen Grund (R) für den Ausfallzeitraum (44) als Ausgabewert bereitstellt,
wobei die Steuereinheit (32) den Ausfallzeitraum (44) und dessen Charakterisierung zeitaufgelöst speichert und im Falle, dass der Ausfallzeitraum (44) durch eine spezifische Komponente (16) der Produktionsmaschine (12) verursacht wird, das maschinelle Lernmodul (48) zusätzlich eine entsprechende Kennung (ID) der Komponente (16) der Produktionsmaschine (12) bereitstellt, welche die Ausfallzeit der Produktionsmaschine (12) verursacht.

2. Verfahren nach Anspruch 1, wobei die Steuereinheit (32) nur solche Zeiträume als Ausfallzeiträume (44) betrachtet, in denen die Produktion der Produktionsmaschine (12) mindestens eine Minute lang, insbesondere mindestens drei Minuten lang, angehalten wird.

3. Verfahren nach Anspruch 1 oder 2, wobei die Steuereinheit (32) zusätzlich Ereignisdaten (ED) von der Produktionsmaschine (12) empfängt und die Ereignisdaten (ED) zusätzlich dem maschinellen Lernmodul (48) als Eingabewert bereitstellt.

4. Verfahren nach einem der vorstehenden Ansprüche, wobei der Grund (R) einer von einer Leerlaufzeit, einer Abweichung vom Produktionsplan, einem Ausrüstungsfehler, einem Werkstattprozessfehler, einer Wartung oder Reinigung der Produktionsmaschine (12), einem Aufbau der Produktionsmaschine (12) oder einem unbekannten Grund ist.

5. Verfahren nach einem der vorstehenden Ansprüche, wobei die charakteristischen Daten (CD) mindestens einen der folgenden Werte umfassen: eine Zeit seit der letzten Produktion der Produktionsmaschine (12), einer Zeit seit dem letzten Ausfallzeitraum (44) der Produktionsmaschine (12), und/oder einer Produktivität der Produktionsmaschine (12) im jeweiligen Zeitraum (40).

6. Verfahren nach einem der vorstehenden Ansprüche, wobei die kombinierten Daten (CD) nachfolgender Zeiträume (40) eine zeitliche Überlappung umfassen.

7. Verfahren nach einem der vorstehenden Ansprüche, wobei die Steuereinheit (32) die Ausfallzeiträume (44) und deren Charakterisierung zeitaufgelöst speichert, wobei der Steuereinheit (32) eine Anzeige (52) zugeordnet ist und wobei die Steuereinheit (32) eine visuelle Auswertung der Ausfallzeiträume (44) auf der Anzeige (52) anzeigt.

8. Verfahren nach einem der vorstehenden Ansprüche, wobei die Steuereinheit (32) zusätzlich eine erwartete Dauer der Ausfallzeit der Produktionsmaschine (12) bereitstellt.

9. Verfahren nach einem der vorstehenden Ansprüche, wobei die Steuereinheit (32) zusätzlich die folgenden Schritte durchführt, um einen Aufbau der Produktionsmaschine (12) zu bestimmen:
a) Verfolgen der aktuellen Auftragskennung der an der Produktionsmaschine (12) durchgeführten Produktion,
b) Erkennen einer Änderung der aktuellen Auftragskennung, und
c) Charakterisieren des Ausfallzeitraums (44) als Aufbauzeitraum, in einem Fall, in dem die Länge des Zeitraums innerhalb eines gewissen Zeitbereichs liegt.

10. System zum Verfolgen der Ausfallzeiten einer Produktionsmaschine (12), wobei das System umfasst
eine Produktionsmaschine (12), die ein Produkt (20) gemäß den Produktionszieldaten (PTD) verarbeitet, wobei die Produktionsmaschine (12) mindestens einen Sensor (18) aufweist, der Sensordaten (SD) bereitstellt, und
eine Steuereinheit (32), die kontinuierlich die Sensordaten (SD) von der Produktionsmaschine (12) empfängt, wobei die Steuereinheit (32) angepasst ist, um ein Verfahren nach einem der vorstehenden Ansprüche durchzuführen.

11. System nach Anspruch 10, wobei die Produktionsmaschine (12) eine von einer Druckmaschine (22), einer Stanzmaschine, einer Heißfolienprägemaschine, einer Falt- und Klebemaschine oder einer Litho-Laminiermaschine ist.

12. System nach Anspruch 10 oder 11, wobei das System mindestens eine zusätzliche Produktionsmaschine (12) umfasst, die ein Produkt gemäß den Produktionszieldaten (PTD) verarbeitet, wobei die zusätzliche Produktionsmaschine (12) mindestens einen Sensor (18) aufweist, der Sensordaten (SD) bereitstellt,
wobei die Steuereinheit (32) kontinuierlich die Sensordaten (SD) von der zusätzlichen Produktionsmaschine (12) empfängt und die Ausfallzeiträume aller Produktionsmaschinen (12) charakterisiert.

## Revendications

1. Procédé de suivi du temps d'arrêt d'une machine de production (12), le procédé comprenant les étapes consistant à :
a) recevoir en continu, au moyen d'une unité de commande (32), des données de capteur (SD) en provenance d'une machine de production (12) et de données cibles de production (PTD),
b) combiner les données de capteur (SD) et les données cibles de production (PTD) sur une certaine période (40), fournir des données combinées (D) et calculer des données caractéristiques (CD) des données combinée (D) par l'unité de commande (32),
c) déterminer si les données combinées (D) proviennent d'une période d'arrêt (44) de la machine de production (12) sur la base des données caractéristiques (CD), et
d) caractériser la période d'arrêt (44) à l'aide d'un module d'apprentissage automatique (48) mis en œuvre dans l'unité de commande (32), dans lequel le module d'apprentissage automatique (48) fournit une raison prédéfinie d'un ensemble de raisons prédéfinies sur la base de valeurs d'entrée, dans lequel les raisons prédéfinies sont enseignées au module d'apprentissage automatique (48) par un entraînement, le module d'apprentissage automatique (48) recevant les données caractéristiques (CD) de la période d'arrêt (44) comme valeur d'entrée et fournissant une raison (R) pour la période d'arrêt (44) comme valeur de sortie,
dans lequel l'unité de commande (32) stocke la période d'arrêt (44) et son temps de caractérisation résolu et dans le cas dans lequel la période d'arrêt (44) est causée par un composant spécifique (16) de la machine de production (12), le module d'apprentissage automatique (48) fournit en outre un identifiant (ID) respectif du composant (16) de la machine de production (12) provoquant le temps d'arrêt de la machine de production (12).

2. Procédé selon la revendication 1, dans lequel l'unité de commande (32) ne considère comme des périodes d'arrêt (44) que les périodes pendant lesquelles la production de la machine de production (12) s'est arrêtée pendant au moins une minute, en particulier pendant au moins trois minutes.

3. Procédé selon la revendication 1 ou 2, dans lequel l'unité de commande (32) reçoit en outre des données d'événement (ED) en provenance de la machine de production (12) et fournit les données d'événement (ED) en plus au module d'apprentissage automatique (48) comme valeur d'entrée.

4. Procédé selon l'une quelconque des revendications précédentes, la raison (R) étant un d'un temps d'inactivité, d'un calendrier de production décalé, d'un défaut d'équipement, d'un défaut de processus en atelier, d'une maintenance ou d'un nettoyage de la machine de production (12), d'une configuration de la machine de production (12) ou d'une raison inconnue.

5. Procédé selon l'une quelconque des revendications précédentes, dans lequel les données caractéristiques (CD) comprennent au moins une des valeurs suivantes : un temps écoulé depuis la dernière production de la machine de production (12), un temps écoulé depuis la dernière période d'arrêt (44) de la machine de production (12) et/ou une productivité de la machine de production (12) pendant la période respective (40).

6. Procédé selon l'une quelconque des revendications précédentes, dans lequel les données combinées (CD) de périodes ultérieures (40) comprennent un chevauchement temporel.

7. Procédé selon l'une quelconque des revendications précédentes, dans lequel l'unité de commande (32) stocke les périodes d'arrêt (44) et leur temps de caractérisation résolu, dans lequel un écran (52) est affecté à l'unité de commande (32) et dans lequel l'unité de commande (32) affiche une évaluation visuelle des périodes d'arrêt (44) sur l'écran (52).

8. Procédé selon l'une quelconque des revendications précédentes, dans lequel l'unité de commande (32) fournit en outre une durée prévue du temps d'arrêt de la machine de production (12).

9. Procédé selon l'une quelconque des revendications précédentes, dans lequel l'unité de commande (32) effectue en outre les étapes suivantes pour déterminer une configuration de la machine de production (12) :
a) le suivi de l'identifiant de tâche actuelle de la production réalisée au niveau de la machine de production (12),
b) la détection d'un changement de l'identifiant de tâche actuelle, et
c) la caractérisation de la période d'arrêt (44) comme une période de configuration dans le cas dans lequel la durée de la période se trouve dans une certaine plage de temps.

10. Système de suivi du temps d'arrêt d'une machine de production (12), le système comprenant
une machine de production (12) traitant un produit (20) selon des données cibles de production (PTD), la machine de production (12) présentant au moins un capteur (18) fournissant des données de capteur (SD), et
une unité de commande (32) recevant en continu les données de capteur (SD) en provenance de la machine de production (12), l'unité de commande (32) étant adaptée pour réaliser un procédé selon l'une des revendications précédentes.

11. Système selon la revendication 10, la machine de production (12) étant une d'une machine d'impression (22), d'une machine de découpe, d'une machine d'estampage à chaud, d'une machine de pliage-collage ou d'une machine de laminage lithographique.

12. Système selon la revendication 10 ou 11, le système comprenant au moins une machine de production (12) supplémentaire traitant un produit selon des données cibles de production (PTD), la machine de production (12) supplémentaire présentant au moins un capteur (18) fournissant des données de capteur (SD),
dans lequel l'unité de commande (32) reçoit en continu les données de capteur (SD) en provenance de la machine de production (12) supplémentaire et caractérise les périodes d'arrêt de toutes les machines de production (12).
